# EUROPÄISCHE PATENTSCHRIFT

(11) **EP 2 200 138 B1**
(45) Veröffentlichungstag und Bekanntmachung des Hinweises auf die Patenterteilung: **21.06.2017**
(21) Anmeldenummer: 09014322.3
(22) Anmeldetag: 17.11.2009
(51) Int. Cl.: H02G 3/12, H02G 3/08

(54) **Elektro-Installationsgerät mit Trägerrahmen und Bedien- oder Funktionselement**
Electric installation device with structure frame and operating or function element
Appareil d'installation électrique doté d'un cadre de support et d'un élément de commande ou de fonctionnement

(30) Priorität: 16.12.2008 DE 102008062529
(43) Veröffentlichungstag der Anmeldung: 23.06.2010
(73) Patentinhaber: ABB AG, 68309 Mannheim (DE)
(72) Erfinder: Wiese, Michael, 42897 Remscheid (DE); Diehl, Sven, 57078 Siegen (DE); Wieske, Stefan, 58285 Gevelsberg (DE); Schneider, Martin, 42499 Hückeswagen (DE)

(56) Entgegenhaltungen:
- EP-A1- 1 394 916
- EP-A1- 1 811 110
- DE-A1- 10 020 216
- US-B1- 6 664 467

## Beschreibung

Die Erfindung betrifft ein Elektro-Installationsgerät mit einem in einer handelsüblichen UP-Gerätedose montierbaren Basisgerät, welches über mindestens einen Trägerrahmen mit mindestens einem Bedien- oder Funktionselement verrastbar ist, wozu das mindestens eine Bedien- oder Funktionselement mittels eines endseitig eines Federschenkels angeordneten Rasthakens durch eine Trägerrahmen-Ausnehmung im Trägerrahmen in Eingriff mit einer Rastfläche steht.

Aus der EP 1 993 180 A2 ist eine Sensoreinheit mit einem in einer handelsüblichen Standard-Unterputzdose montierbaren Basisgerät bekannt, welches mit mindestens einem Bedien- oder Funktionselement verbindbar ist, wobei ein Grundträger vorgesehen ist, der mindestens ein Feld inklusive eines eingebrachten Tragrahmens zur Aufnahme eines Bedien- oder Funktionselementes aufweist, wobei im Grundträger mehrere elektrisch leitende Schienen integriert sind, welche teilweise für die elektrische Energieversorgung und teilweise für die Kommunikation dienen.

Die Montage eines Bedien- oder Funktionselementes auf einem Trägerrahmen der Sensoreinheit erfolgt vorzugsweise über eine Verrastung. Dabei soll einerseits im Zuge der erstmaligen Montage eines Bedien- oder Funktionselementes auf dem Trägerrahmen eine Demontage eines Bedien- oder Funktionselementes vom Trägerrahmen möglich sein, um derart Einstellungen vornehmen/korrigieren zu können, andererseits soll jedoch ein unbefugtes Mitnehmen eines Bedienelementes "im Vorbeigehen" während des späteren Normalbetriebes verhindert werden. Die DE 100 20 216 A1 beschreibt ein Bedienteil, das in einen Rahmen eingerastet wird, wobei die Rasten durch Einführen von Verriegelungskeilen von der Bedienteilseite aus gegen ein Abziehen gesichert werden.

Der Erfindung liegt die Aufgabe zugrunde, ein Elektro-Installationsgerät der eingangs genannten Art mit optimierter Verrastung zwischen einem Bedien- oder Funktionselement und einem Trägerrahmen anzugeben.
Diese Aufgabe wird in Verbindung mit den Merkmalen des Oberbegriffes erfindungsgemäß dadurch gelöst, dass ein Entnahmeschutz vorgesehen ist, welcher über Verbindungsmittel am Ort der Trägerrahmen-Ausnehmung am Trägerrahmen montierbar ist und welcher einen Rahmen und eine daran befestigte, in die Trägerrahmen-Ausnehmung eintauchende Stützplatte aufweist, welche eine Auslenkung des Federschenkels des Bedien- oder Funktionselements erschwert. Die mit der Erfindung erzielbaren Vorteile liegen insbesondere darin, dass durch Nicht-Montage / Montage (Nicht-Einklipsen / Einklipsen) eines Entnahmeschutzes quasi eine zweistufige Verrastung zwischen einem Bedien- oder Funktionselement und einem Trägerrahmen verifiziert wird. Bei der ersten Verrastungsstufe - Nicht-Einklipsen des Entnahmeschutzes - kann beliebig oft die Demontage eines Bedien- oder Funktionselementes vom Trägerrahmen mit üblicher, relativ geringer Kraftaufwendung (Abzugskraft) erfolgen, indem das Bedien- oder Funktionselement an den Kanten seiner Frontplatte in die Hand genommen und vom Trägerrahmen abgezogen wird. Derart können durch den Installateur Einstellungen am Basisgerät bei demontiertem Bedien- oder Funktionselement vorgenommen, anschließend bei montiertem Bedien- oder Funktionselement getestet und gegebenenfalls bei demontiertem Bedien- oder Funktionselement geändert werden. Wenn alle Einstellungen in gewünschter Weise und mit zufriedenstellendem Ergebnis vorgenommen worden sind, werden zunächst der Entnahmeschutz und anschließend das Bedien- oder Funktionselement montiert. Danach ergibt sich eine wesentliche Erhöhung der zum Lösen erforderlichen Abzugskraft und somit eine Sicherung gegen ungewollte und unbefugte Entnahme. Ein Abziehen des Bedien- oder Funktionselementes vom Trägerrahmen per Hand ist nicht mehr möglich. Ein Mitnehmen des Bedien- oder Funktionselementes "im Vorbeigehen" durch unbefugte Personen wird verhindert. Dabei ist Montage des Entnahmeschutzes am Trägerrahmen durch Einklipsen/Verrasten sehr leicht möglich. Ferner ist auch eine Demontage des Entnahmeschutzes vom Trägerrahmen zu einem späteren Zeitpunkt möglich, wozu allerdings ein Werkzeug erforderlich ist, was wie gewünscht eine Demontage durch unbefugte Personen unterbindet oder zumindest wesentlich erschwert.

Vorteilhafte Ausgestaltungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: einen Schnitt durch ein Elektro-Installationsgerät,
- Fig. 2: eine perspektivische Sicht auf die Oberseite eines Entnahmeschutzes,
- Fig. 3: eine perspektivische Sicht auf die Unterseite eines Entnahmeschutzes,
- Fig. 4: eine perspektivische Sicht auf die Oberseite eines Trägerrahmens,
- Fig. 5: eine Detailansicht zu Fig. 4,
- Fig. 6: eine perspektivische Sicht auf die Unterseite eines Trägerrahmens,
- Fig. 7, 8: zwei Detailansichten zu Fig. 6,
- Fig. 9: ein in Form einer Sensoreinheit ausgebildetes Elektro-Installationsgerät,
- Fig. 10, 11: schematische Skizzen zur Erläuterung der Demontage eines Elektro-Installationsgeräts bei montiertem Entnahmeschutz.

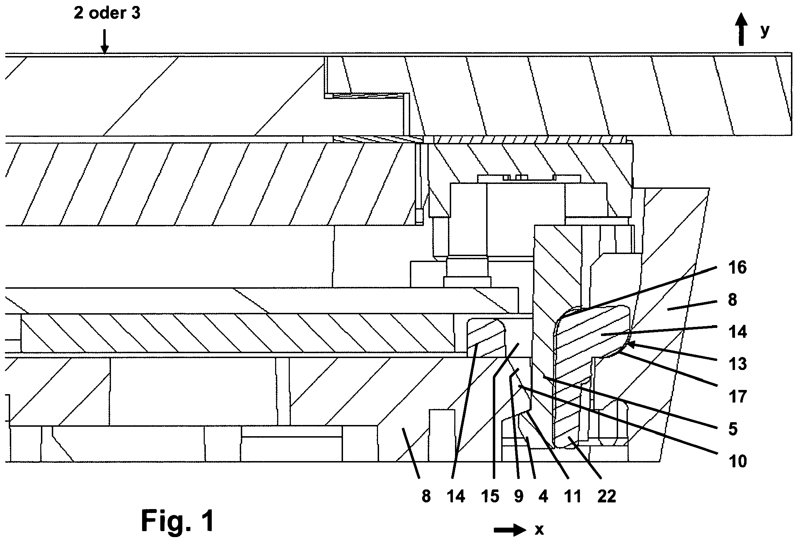

In Fig. 1 ist ein Schnitt durch ein Elektro-Installationsgerät, insbesondere eine Sensoreinheit (Tastsensoreinheit), dargestellt. Das Elektro-Installationsgerät 1 weist einen Trägerrahmen 8 auf, auf welchem mindestens ein Bedien- oder Funktionselement 2 oder 3 befestigt ist, beispielsweise ein Dreh-Drückelement mit Drehknopf, ein Drehelement, ein Einfach-Taster, ein Mehrfach-Taster (wie Zweifach-Taster oder Dreifach-Taster), ein Display (Anzeigeelement), ein Touchscreen, ein Bewegungsmelder oder ein Kommunikationselement (wie Lautsprecher oder Mikrofon). Der Trägerrahmen 8 hat die Funktion eines Verbindungselementes zwischen einem in einer handelsüblichen UP-Gerätedose montiertem Basisgerät und den einzelnen Bedien- oder Funktionselementen.

Die Befestigung zwischen Bedien- oder Funktionselement 2 oder 3 und dem Trägerrahmen 8 erfolgt durch eine Verrastung, wozu die Bedien- oder Funktionselemente 2 oder 3 jeweils mit mindestens einem Rasthaken 4 versehen sind, welcher am freien Ende eines Federschenkels 5 angeordnet ist. Korrespondierend hierzu weist der Trägerrahmen 8 mindestens eine Trägerrahmen-Ausnehmung 9 für den Eingriff des Rasthakens 4 auf. Eine Seitenwand dieser Trägerrahmen-Ausnehmung 9 weist eine spezielle Ausgestaltung mit einer Gleitfläche 10 und einer sich anschließenden Rastfläche 11 auf. Beim Einführen des Rasthakens 4 in die Trägerrahmen-Ausnehmung 9 gleitet der Rasthaken 4 zunächst entlang der Gleitfläche 10 unter gleichzeitiger Auslenkung des Federschenkels 5 in x-Richtung. Nachdem der Rasthaken 4 die durch Gleitfläche 10 und Rastfläche 11 gebildete gemeinsame Kante erreicht hat, federt der Federschenkel 5 mit dem Rasthaken 4 zurück und der Rasthaken 4 greift unter die Rastfläche 11, wodurch die gewünschte Befestigung erzielt wird.

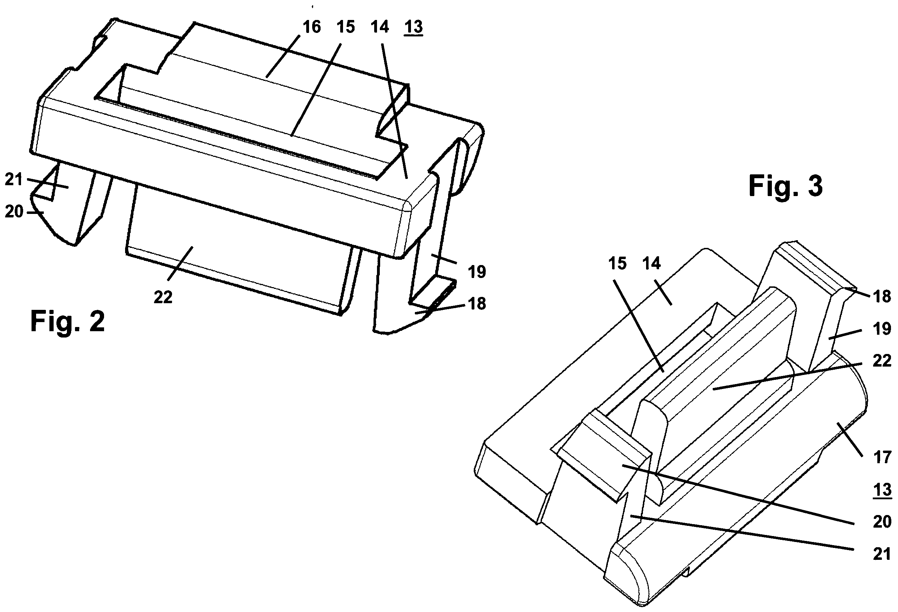

Bei der Befestigung zwischen einem Bedien- oder Funktionselement 2 oder 3 und dem Trägerrahmen 8 spielt ein Entnahmeschutz 13 als zusätzliche separate Baukomponente eine wesentliche Rolle. Dieser in die Trägerrahmen-Ausnehmung 9 einführbare und dort verrastbare Entnahmeschutz 13 ist in den nachfolgenden Figuren 2 und 3 detailliert dargestellt, in der Schnitt-Darstellung gemäß Fig. 1 sind lediglich ein Rahmen 14 sowie eine daran angeformte Stützplatte 22 des Entnahmeschutzes 13 zu erkennen, wobei der Rahmen 14 eine Entnahmeschutz-Ausnehmung 15 des Entnahmeschutzes 13 umschließt. Zum erleichterten Einführen des Rasthakens 4 in die Entnahmeschutz-Ausnehmung 15 weist letztere eine Einführschräge 16 an einer Innenkante des Rahmens 14 auf. Um einen am Trägerahmen 8 montierten Entnahmeschutz 13 in einfacher Weise demontieren zu können, weist der Rahmen 14 an einer (bei montiertem Zustand) dem Trägerrahmen 8 zugewandten Außenkante eine Abschrägung 17 auf. Durch Einführen eines Werkzeuges zwischen Abschrägung 17 und Trägerrahmen 8, beispielsweise der Klinge eines Schraubendrehers, lässt sich der Entnahmeschutz 13 vom Trägerrahmen 8 abhebeln. Alternativ lässt sich der Entnahmeschutz 13 auch von der Rückseite des Trägerrahmens 8 her ausdrücken.

Wie bereits aus Fig. 1 hervorgeht, ist eine zweistufige Verrastung zwischen einem Bedien- oder Funktionselement 2 oder 3 und dem Trägerrahmen 8 realisierbar:
- Bei der ersten Verrastungsstufe ist der Entnahmeschutz 13 nicht in die Trägerrahmen-Ausnehmung 9 des Trägerrahmens 8 eingebracht. Es sei angenommen, der Rasthaken 4 greife unter die Rastfläche 11, so dass sich eine Befestigung des Bedien- oder Funktionselementes 2 oder 3 am Trägerrahmen 8 ergibt. Sobald am Bedien- oder Funktionselement 2 oder 3 per Hand in y-Richtung gezogen wird, löst sich nach Überschreiten einer vorgebbaren Kraft (Abzugskraft) die Verrastung zwischen Rasthaken 4 und Rastfläche 11 unter gleichzeitiger Auslenkung des Federschenkels 5 in x-Richtung. Das Bedien- oder Funktionselement 2 oder 3 lässt sich per Hand vom Trägerrahmen 8 lösen.
- Bei der zweiten Verrastungsstufe ist der Entnahmeschutz 13 in die Trägerrahmen-Ausnehmung 9 des Trägerrahmens 8 eingebracht. Beim Einführen des Rasthakens 4 in die Entnahmeschutz-Ausnehmung 15 und anschließenden Druck auf das Bedien- oder Funktionselement (entgegen der y-Richtung) ergibt sich zunächst eine geringe Auslenkung der Stützplatte 22 in x-Richtung, bis der Rasthaken am Ort der Rastfläche 11 verrastet. Es sei angenommen, der Rasthaken 4 greife unter die Rastfläche 11, so dass sich eine Befestigung des Bedien- oder Funktionselementes 2 oder 3 am Trägerrahmen 8 ergibt. Sobald am Bedien- oder Funktionselement 2 oder 3 per Hand in y-Richtung gezogen wird, entsteht - bedingt durch die Schrägflächen der Rastfläche 11 und des Rasthakens 4 - eine Kraftkomponente in x-Richtung, welche versucht, den Rasthaken in x-Richtung auszulenken. Der Rasthaken 4 mit Federschenkel 5 presst somit gegen die Stützplatte 22 des Entnahmeschutzes 13. Die Stützplatte 22 verhindert aufgrund ihrer relativ hohen Steifigkeit eine nennenswerte Auslenkung des Federschenkels 5 in x-Richtung. Folglich wird der Rasthaken 4 des Bedien- oder Funktionselementes im eingerasteten Zustand blockiert. Das Bedien- oder Funktionselement 2 oder 3 lässt sich nicht mehr per Hand vom Trägerrahmen 8 lösen.

In Fig. 2 ist eine perspektivische Sicht auf die Oberseite eines Entnahmeschutzes dargestellt. Die Oberseite des Entnahmeschutzes 13 ist nach erfolgter Montage am Trägerrahmen 8 dem Bedien- oder Funktionselement 2 oder 3 zugewandt. Wie zu erkennen ist, ermöglicht der Rahmen 14 des aus einem Kunststoff bestehenden Entnahmeschutzes 13 die einstückige Anformung der Stützplatte 22 sowie zweier Federschenkel 19 bzw. 21 mit endseitig daran befindlichen Rasthaken 18 bzw. 20. An der Oberseite der Stützplatte 22 respektive der zugehörigen Innenkante des Rahmens 14 befindet sich die Einführschräge 16 für das erleichterte Einführen des Rasthakens 4 in die vom Rahmen 14 umschlossene Entnahmeschutz-Ausnehmung 15.

In Fig. 3 ist eine perspektivische Sicht auf die Unterseite eines Entnahmeschutzes dargestellt. Es sind wiederum die beiden über Federschenkel 19 bzw. 21 mit dem Rahmen 14 verbundenen Rasthaken 18 bzw. 20, die Stützplatte 22 sowie die Entnahmeschutz-Ausnehmung 15 zu erkennen. Des Weiteren ist die an einer Außenkante des Rahmens 14 vorgesehene Abschrägung 17 dargestellt (welche ggf. ein Abhebeln des Entnahmeschutzes 13 vom Trägerrahmen 8 erleichtert).

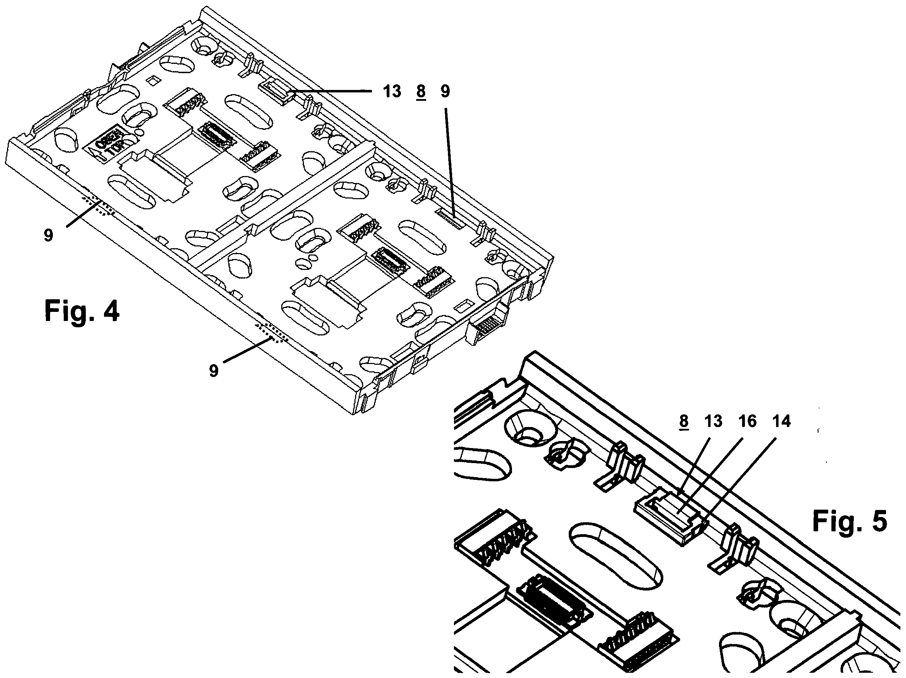

In Fig. 4 ist eine perspektivische Sicht auf die Oberseite eines Trägerrahmens dargestellt. Der gezeigte Trägerrahmen 8 ist zur Aufnahme von zwei Bedien- oder Funktionselementen 2 oder 3 geeignet, wobei jedes der Bedien- oder Funktionselemente zwei Rasthaken 4 aufweist, welche in je zwei sich gegenüberliegende Trägerrahmen-Ausnehmungen 9 des Trägerrahmens 8 eingreifen. Eine der Trägerrahmen-Ausnehmungen 9 ist beispielhaft mit einem Entnahmeschutz 13 bestückt. Selbstverständlich können abweichend hiervon auch Trägerrahmen für lediglich ein einziges Bedien- oder Funktionselement oder für drei, vier usw. Bedien- oder Funktionselemente realisiert sein. Des Weiteren ist es selbstverständlich auch möglich, je Bedien- oder Funktionselement lediglich einen einzigen Rasthaken oder drei, vier usw. Rasthaken vorzusehen.

In Fig. 5 ist eine Detailansicht zu Fig. 4 dargestellt, um derart die Lage eines in eine Trägerrahmen-Ausnehmung 9 des Trägerrahmens 8 eingesteckten Entnahmeschutzes 13 mit Rahmen 14 und Einführschräge 16 zu zeigen.

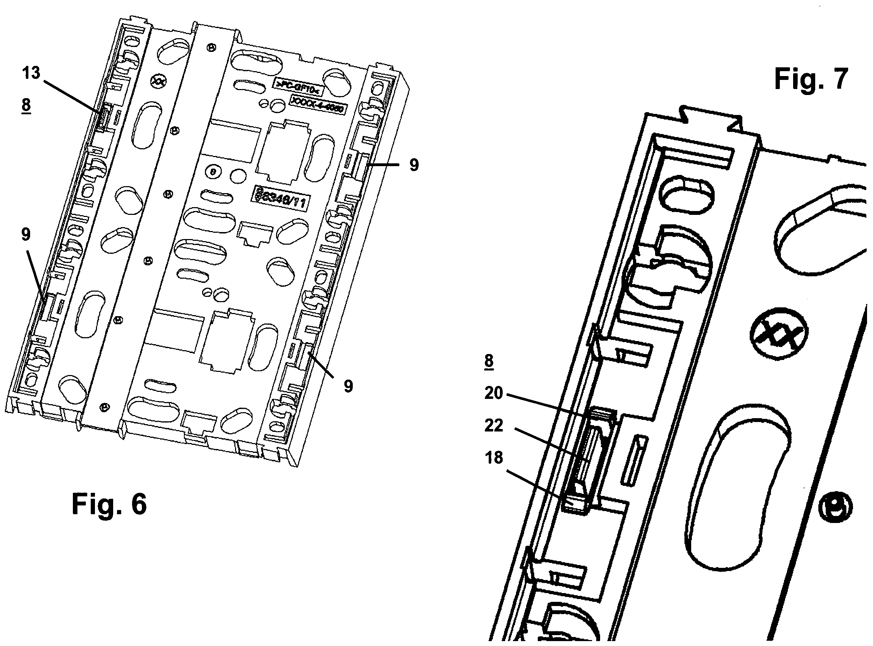

In Fig. 6 ist eine perspektivische Sicht auf die Unterseite eines Trägerrahmens dargestellt. Der gezeigte Trägerrahmen 8 ist zur Aufnahme von zwei Bedien- oder Funktionselementen 2 oder 3 geeignet, wobei jedes der Bedien- oder Funktionselemente zwei Rasthaken 4 aufweist, welche in je zwei sich gegenüberliegende Ausnehmungen 9 des Trägerrahmens 8 eingreifen. Eine der Ausnehmungen 9 ist beispielhaft mit einem Entnahmeschutz 13 bestückt.

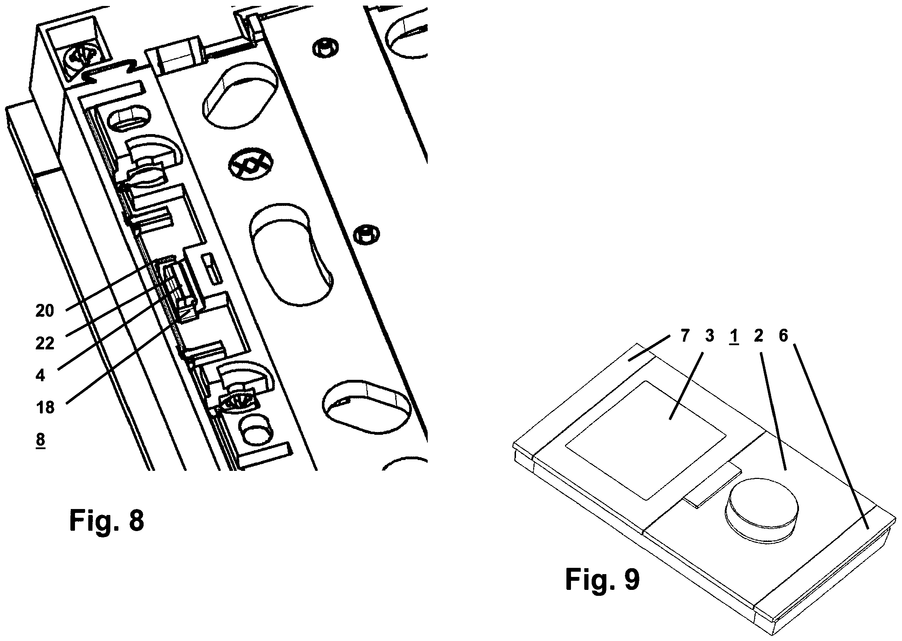

In den Fig. 7 und 8 sind zwei Detailansichten zu Fig. 6 dargestellt, wobei bei beiden Ansichten ein Entnahmeschutz 13 in eine Trägerrahmen-Ausnehmung 9 eingesteckt ist. Die Fixierung des Entnahmeschutzes 13 am Trägerrahmen 8 erfolgt, indem der Entnahmeschutz in die Trägerrahmen-Ausnehmung 9 eingesteckt wird, bis die beiden Rasthaken 18, 20 über die Unterseite des Trägerrahmens 8 greifen, während gleichzeitig der Rahmen 14 gegen die Oberseite des Trägerahmens 8 drückt. Bei der Darstellung gemäß Fig. 8 ist zusätzlich ein durch die Entnahmeschutz-Ausnehmung 15 des Entnahmeschutzes 13 greifender und an der Rastfläche 11 des Trägerrahmens 8 verrasteter Rasthaken 4 eines Bedien- oder Funktionselementes zu erkennen.

In Fig. 9 ist ein in Form einer Sensoreinheit ausgebildetes Elektro-Installationsgerät dargestellt. Das gezeigte Elektro-Installationsgerät 1 besitzt beispielsweise zwei Bedien- oder Funktionselemente 2, 3, wobei das Bedien- oder Funktionselement 2 als Dreh-Drückelement mit Drehknopf und das Bedien- oder Funktionselement 3 als Display ausgebildet ist. Endseitig der beiden Bedien- oder Funktionselemente 2 bzw. 3 ist je ein Abschlusselement 6 bzw. 7 angeordnet und auf dem Trägerrahmen 8 verrastet. Das zugehörige für den Einbau in eine handelsübliche UP-Gerätedose nach DIN 49073 geeignete Basisgerät ist nicht dargestellt.

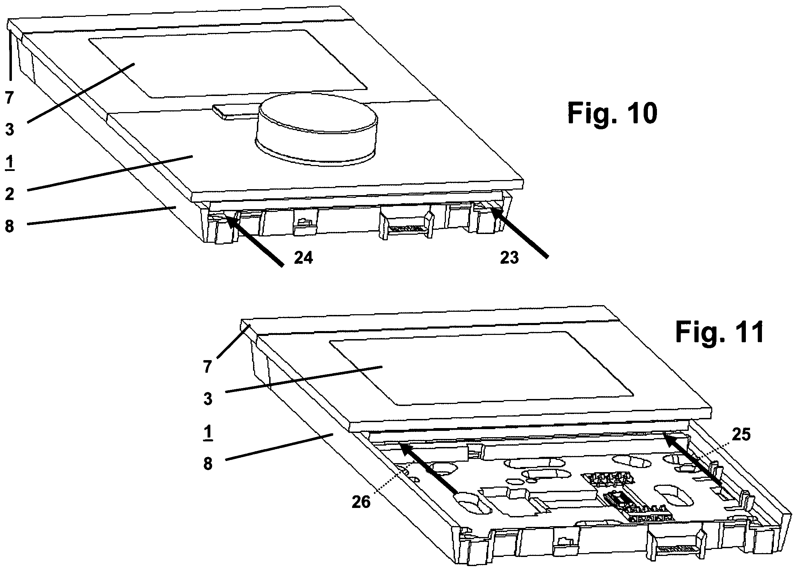

In den Fig. 10 und 11 sind schematische Skizzen zur Erläuterung der Demontage eines Elektro-Installationsgeräts bei montiertem Entnahmeschutz dargestellt.

Soll bei montiertem Elektro-Installationsgerät 1 und bei montiertem Entnahmeschutz 13 (Vorliegen der zweiten Verrastungsstufe) ein Bedien- oder Funktionselement 2 oder 3 vom Trägerrahmen 8 gelöst werden, so ist es in einem ersten Schritt zunächst erforderlich, das Abschlusselement 6 zu demontieren. Danach wird in einem zweiten Schritt ein Werkzeug (Klinge eines Schraubenziehers) an den beiden Ecken 23, 24 des Bedien- oder Funktionselementes 2 zwischen das Bedien- oder Funktionselement 2 und den Trägerrahmen 8 eingeführt, um derart ein Abhebein des Bedien- oder Funktionselementes 2 vom Trägerrahmen 8 zu bewirken - siehe Fig. 10. Nachdem das Bedien- oder Funktionselement 2 vom Trägerrahmen 8 demontiert ist, wird das Werkzeug in einem dritten Schritt an den beiden Ecken 25 und 26 des Bedien- oder Funktionselementes 3 zwischen das Bedien- oder Funktionselement 3 und den Trägerrahmen 8 eingeführt, um derart ein Abhebeln des Bedien- oder Funktionselementes 3 vom Trägerrahmen 8 zu bewirken - siehe Fig. 11. Selbstverständlich ist alternativ auch eine gleichartige Vorgehensweise möglich, indem zunächst das Abschlusselement 7 abgezogen wird. Anschließend kann der Entnahmeschutz 13 vom Trägerrahmen 8 abgehebelt respektive aus der Trägerrahmen-Ausnehmung 9 herausgedrückt werden.

### Bezugszeichenliste

- 1: Elektro-Installationsgerät
- 2: Bedien- oder Funktionselement
- 3: Bedien- oder Funktionselement
- 4: Rasthaken eines Bedien- oder Funktionselements
- 5: Federschenkel
- 6: Abschlusselement
- 7: Abschlusselement
- 8: Trägerrahmen
- 9: Trägerrahmen-Ausnehmung
- 10: Gleitfläche
- 11: Rastfläche
- 12: ---
- 13: Entnahmeschutz
- 14: Rahmen
- 15: Entnahmeschutz-Ausnehmung
- 16: Einführschräge
- 17: Abschrägung
- 18: Rasthaken
- 19: Federschenkel
- 20: Rasthaken
- 21: Federschenkel
- 22: Stützplatte
- 23: Ecke des Bedien- oder Funktionselements 2
- 24: Ecke des Bedien- oder Funktionselements 2
- 25: Ecke des Bedien- oder Funktionselements 3
- 26: Ecke des Bedien- oder Funktionselements 3

- x: Richtung
- y: Richtung

## Patentansprüche

1. Elektro-Installationsgerät (1) mit einem in einer handelsüblichen UP-Gerätedose montierbaren Basisgerät, welches über mindestens einen Trägerrahmen (8) mit mindestens einem Bedien- oder Funktionselement (2, 3) verrastbar ist, wozu das mindestens eine Bedien- oder Funktionselement (2, 3) mittels eines endseitig eines Federschenkels (5) angeordneten Rasthakens (4) durch eine Trägerrahmen-Ausnehmung (9) im Trägerrahmen (8) in Eingriff mit einer Rastfläche (11) steht,
**dadurch gekennzeichnet, dass** ein Entnahmeschutz (13) vorgesehen ist, welcher über Verbindungsmittel am Ort der Trägerrahmen-Ausnehmung (9) am Trägerrahmen (8) montierbar ist und welcher einen Rahmen (14) und eine daran befestigte, in die Trägerrahmen-Ausnehmung (9) eintauchende Stützplatte (22) aufweist, welche eine Auslenkung des Federschenkels (5) des Bedien- oder Funktionselements (2, 3) erschwert.

2. Elektro-Installationsgerät (1) nach Anspruch 1, **dadurch gekennzeichnet, dass** der Rahmen (14) des Entnahmeschutzes (13) eine Entnahmeschutz-Ausnehmung (15) für das Einführen des Rasthakens (4) des Bedien- oder Funktionselements (2, 3) aufweist.

3. Elektro-Installationsgerät (1) nach Anspruch 1 oder 2, **dadurch gekennzeichnet, dass** der Rahmen (14) des Entnahmeschutzes (13) eine Einführschräge (16) für das erleichterte Einführen des Rasthakens (4) des Bedien- oder Funktionselements (2, 3) aufweist.

4. Elektro-Installationsgerät (1) nach einem der vorstehenden Ansprüche, **dadurch gekennzeichnet, dass** der Rahmen (14) des Entnahmeschutzes (13) eine Abschrägung (17) für das erleichterte Einführen eines Werkzeuges zwischen Entnahmeschutz (13) und Trägerrahmen (8) aufweist.

5. Elektro-Installationsgerät (1) nach einem der vorstehenden Ansprüche, **dadurch gekennzeichnet, dass** als Verbindungsmittel für die Befestigung des Entnahmeschutzes (13) am Trägerrahmen (8) mindestens ein endseitig eines Federschenkels (19, 21) angeordneter Rasthaken (18, 20) dient.

## Claims

1. Electrical installation device (1) comprising a base device which can be mounted in a commercially available flush-mounted device box and which can be latched to at least one operator control or functional element (2, 3) by means of at least one carrier frame (8), to which end the at least one operator control or functional element (2, 3) engages with a latching face (11) by means of a latching hook (4), which is arranged at the end of a spring limb (5), by a carrier frame recess (9) in the carrier frame (8),
**characterized in that** a removal protection means (13) is provided which can be mounted on the carrier frame (8) by means of connecting means at the site of the carrier frame recess (9) and which has a frame (14) and a supporting plate (22) which is fastened to the said frame and enters the carrier frame recess (9) and which makes it difficult to deflect the spring limb (5) of the operator control or functional element (2, 3).

2. Electrical installation device (1) according to Claim 1, **characterized in that** the frame (14) of the removal protection means (13) has a removal protection recess (15) for insertion of the latching hook (4) of the operator control or functional element (2, 3).

3. Electrical installation device (1) according to Claim 1 or 2, **characterized in that** the frame (14) of the removal protection means (13) has an insertion slope (16) for easier insertion of the latching hook (4) of the operator control or functional element (2, 3) .

4. Electrical installation device (1) according to one of the preceding claims, **characterized in that** the frame (14) of the removal protection means (13) has a bevel (17) for easier insertion of a tool between removal protection means (13) and carrier frame (8).

5. Electrical installation device (1) according to one of the preceding claims, **characterized in that** at least one latching hook (18, 20) which is arranged at the end of a spring limb (19, 21) serves as connecting means for fastening the removal protection means (13) to the carrier frame (8).

## Revendications

1. Appareil d'installation électrique (1) comportant un appareil de base pouvant être monté dans une prise d'appareil UP du commerce, pouvant s'encliqueter par l'intermédiaire d'au moins un châssis de support (8) sur au moins un élément de commande ou fonctionnel (2, 3), dans lequel l'au moins un élément de commande ou fonctionnel (2, 3) est en prise avec une surface d'encliquetage (11) au moyen d'un crochet d'encliquetage (4) disposé du côté de l'extrémité d'une branche de ressort (5) à travers un évidement de châssis de support (9) présent dans le châssis de support (8),
**caractérisé en ce qu'**il est prévu un dispositif anti-retrait (13) qui peut être monté sur le châssis de support (8) par l'intermédiaire de moyens de liaison à l'emplacement de l'évidement de châssis de support (9) et qui présente un châssis (14) et une plaque de soutien (22) fixée à celui-ci et pénétrant dans l'évidement de châssis de support (9), et qui rend difficile un écartement de la branche de ressort (5) de l'élément de commande ou fonctionnel (2, 3).

2. Appareil d'installation électrique (1) selon la revendication 1, **caractérisé en ce que** le châssis (14) du dispositif anti-retrait (13) comporte un évidement de dispositif anti-retrait (15) destiné à l'insertion du crochet d'encliquetage (4) de l'élément de commande ou fonctionnel (2, 3).

3. Appareil d'installation électrique (1) selon la revendication 1 ou 2, **caractérisé en ce que** le châssis (14) du dispositif anti-retrait (13) présente un biseau d'insertion (16) facilitant l'insertion du crochet d'encliquetage (4) de l'élément de commande ou fonctionnel (2, 3).

4. Appareil d'installation électrique (1) selon l'une quelconque des revendications précédentes, **caractérisé en ce que** le châssis (14) du dispositif anti-retrait (13) présente un biseau (17) facilitant l'insertion d'un outil entre le dispositif anti-retrait (13) et le châssis de support (8).

5. Appareil d'installation électrique (1) selon l'une quelconque des revendications précédentes, **caractérisé en ce qu'**au moins un crochet d'encliquetage (18, 20) disposé du côté de l'extrémité d'une branche de ressort (19, 21) est utilisé en tant que moyens de liaison pour la fixation du dispositif anti-retrait (13) sur le châssis de support (8).
